# EUROPEAN PATENT SPECIFICATION

(11) **EP 3 136 627 B1**
(45) Date of publication and mention of the grant of the patent: **17.11.2021**
(21) Application number: 15182805.0
(22) Date of filing: 27.08.2015
(51) Int. Cl.: H04B 17/17

(54) **ELECTRONIC DEVICE AND METHOD**
ELEKTRONISCHE VORRICHTUNG UND VERFAHREN
DISPOSITIF ELECTRONIQUE ET PROCEDE

(43) Date of publication of application: 01.03.2017
(73) Proprietor: Kabushiki Kaisha Toshiba, Tokyo 105-8001 (JP)
(72) Inventor: TSUJI, Tadashi, Tokyo, 105-8001 (JP)
(74) Representative: Henkel & Partner mbB

(56) References cited:
- WO-A1-00/40050
- WO-A1-2013/015725
- US-A1- 2014 237 080
- MUKHOPADHYAY P ET AL: "Approach to make Smart Grid a reality", 2014 INTERNATIONAL CONFERENCE ON ADVANCES IN ENERGY CONVERSION TECHNOLOGIES (ICAECT), IEEE, 23 January 2014 (2014-01-23), pages 77-82, XP032574298, DOI: 10.1109/ICAECT.2014.6757065 ISBN: 978-1-4799-2205-5 [retrieved on 2014-03-05]
- None

## Description

Embodiments described herein relate generally to an electronic device with a wireless communication function and a method.

Recently, there are various electronic devices with wireless communication functions. These electronic devices include electricity meters, gas meters, water meters and the like called smart meters. A smart meter transmits the consumption of electricity, gas or water to the server of a power company, a gas company or a water company at regular intervals. The server bills for the amount used and transmits the bill or the like to the smart meter. Further, in order to grasp the situation of a power failure in the service area of the power company, the smart meter transmits, at the time of occurrence of the power failure and at the time of power recovery, power failure information and power recovery information such as an ID number of its own meter to the server of the power company.

The smart meter and the server are connected to each other, for example, in the following manner. The smart meter is wirelessly connected to a wireless base station via a mobile phone line. The wireless base station is connected to the Internet. As a result, the smart meter is connected to the server which is connected to the Internet. The smart meter includes a built-in internal antenna configured to perform a wireless communication with the wireless base station, but there are some areas in which a wireless communication cannot be performed with the wireless base station by the internal antenna. In order to install the smart meter in such areas having weak electric field intensity, it is possible to further attach an external antenna to the smart meter. In installing the smart meter, the intensity of a signal the internal antenna receives is checked, and if the intensity is less than a threshold value, the smart meter is set in such a manner as to perform a communication using the external antenna. The smart meter is attached on the wall of a house at the level of the user's eyes, and the external antenna is installed on the roof or the like and detachably attached to the smart meter via a cable. Therefore, the external antenna may be detached, disconnected, broken or the like.

The smart meter is configured to transmit the consumption to the server at regular intervals, for example, every half an hour, and thus the smart meter needs to be supplied with power and be operable at all times. The smart meter is supplied with commercial power from an electricity meter connected to commercial power and constantly supplied with commercial power. Therefore, when the internal antenna fails to establish a communication and the external antenna is connected to perform a communication instead and if the external antenna has a problem such as disconnection or breakage, the consumption will not be transmitted to the server and the server will not be able to bill any longer, which is an undesirable situation. If the external antenna has a problem, it is preferable to detect the problem immediately and informs a user of the problem, thereby taking necessary measures such as replacement or repair.

WO 2013 015 725 A1 discloses a method in a first radio base station for enabling detection of a faulty antenna in a radio communications network. The radio communication network comprises the first radio base station providing radio coverage in a first cell, and a second radio base station providing radio coverage in a second cell.

WO 0 040 050 A1 discloses an antenna monitor which collects statistics about the received signal strengths of each antenna in a cooperating antenna array over long periods of time. The accumulated totals are then compared after a statistically sufficient number of samples have been collected and averaged. Faulty antennas, including broken ones and ones with bad connections, will be revealed by those corresponding signal paths having relatively low accumulated totals.

US 2014 237 080 A1 discloses a smart node in a local area network comprising a first transceiver module for communicating with a plurality of other nodes in the local area network, a second transceiver module for communicating with an access node in a wide area network, and a processor that is configured to establish a connection with at least one neighboring node in the local area network, determine a portal candidate score for the smart node based on at least one node characteristic value, determine if the smart node is acceptable to act as a portal between the local area network and the wide area network, and connect, in the case that the smart node is acceptable to act as a portal, to the access node in the wide area network.

MUKHOPADHYAY P ET AL, "Approach to make Smart Grid a reality", 2014 INTERNATIONAL CONFERENCE ON ADVANCES IN ENERGY CONVERSION TECHNOLOGIES (ICAECT), IEEE, doi:10.1109/ICAECT.2014.6757065, ISBN 978-1-4799-2205-5, (20140123), pages 77 - 82, (20140305), XP032574298 [A] 1-14 * Sections II and IV , discloses the use of an internal antenna and an external antenna in a smart meter.

Embodiments described herein aim to provide an electronic device which performs a communication with an external device using an external antenna and detects a problem of the external antenna in order to notify the problem of the external antenna to the external device.

The above object is achieved by means of an electronic device according to claim 1 and by a communication method according to claim 6. The dependent claims are directed to different advantageous aspects of the invention.

A general architecture that implements the various features of the embodiments will now be described with reference to the drawings. The drawings and the associated descriptions are provided to illustrate the embodiments and not to limit the scope of the invention.
FIG. 1 is a block diagram showing an example of the whole network including an electronic device of an embodiment.
FIG. 2 is a block diagram showing an example of the electronic device of the embodiment.
FIG. 3 is a block diagram showing an example of the structure of a 2G/3G/LTE device of the embodiment.
FIG. 4 is a flowchart showing an example of the operation of the embodiment.
FIG. 5 is a flowchart showing a specific example of the notification step of FIG. 4.

Embodiments will be described hereinafter with reference to the accompanying drawings.

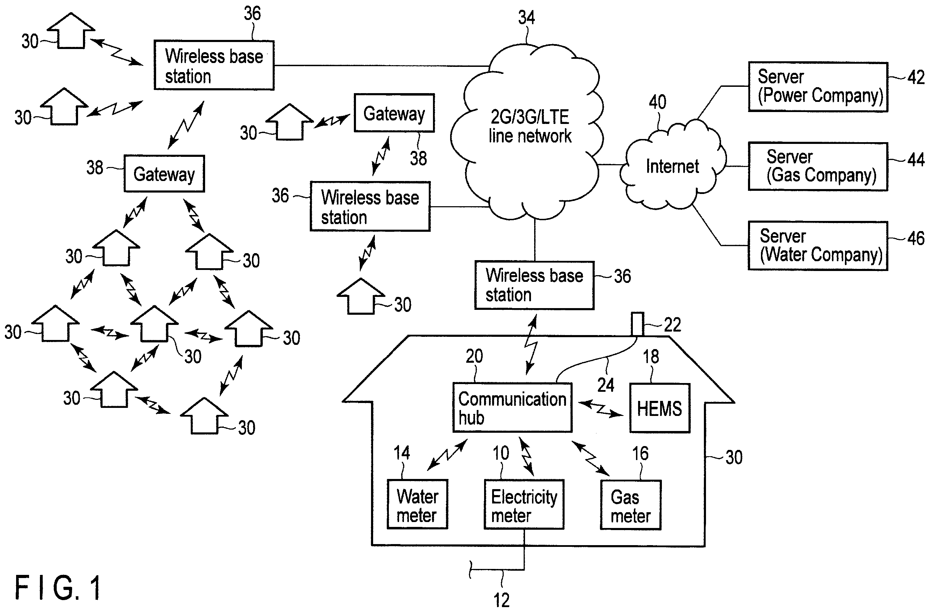

FIG. 1 is a block diagram showing an example of a state where an electronic device of an embodiment is connected to a server via a network such as the Internet. The following description is based on the assumption that the electronic device of the present embodiment is an electricity meter with a wireless communication function, namely, a smart meter, but the electronic device of the present embodiment is not necessarily limited to the above-described meter and may be a meter other than the above-described meter. The electronic device of the present embodiment is not necessarily a meter and may be any electronic device configured to perform a wireless communication using an external antenna. FIG. 1 further illustrates a gas meter and a water meter and shows an example where all meters use a single common wireless communication function, but it is also possible that each meter has a wireless communication function individually. FIG. 1 shows an example where a meter unit and a wireless communication unit are realized as separate units and are then combined together before factory-shipped or installed in a house, but it is also possible that the meter unit and the communication unit are realized integrally as a single unit. In the case of being combined together before installed in a house, these units may be combined detachably for convenience in replacing the communication unit when the communication unit is broken or its function needs to be upgraded. Note that data is transmitted or received between these units not only by a wired connection but also by a wireless communication. The communication unit is supplied with power from the meter unit. The meter unit connected to commercial power operates on commercial power. Therefore, the communication unit also operates on commercial power. The smart meter does not operate at the time of a power failure.

A meter unit, namely, an electricity meter 10 is connected to a service conductor 12 which carries commercial power to each house. Since the structures of the houses are similar to each other, only a smart meter of one house will be considered. The smart meters of the other houses have the same structure. Note that each smart meter has an arbitrary number of meter units. Depending on houses, it is possible to connect only an electricity meter to a communication hub 20 to use it as a smart meter and use the other meters not as smart meters. Meter reading data of the electricity meter 10 is transmitted to the wireless communication unit, namely, the communication hub 20. Here, although it is possible to transmit the data by a wired communication, the following description is based on the assumption that the data is transmitted by a wireless communication to the communication hub 20 conforming to the ZigBee (registered trademark) standard at regular intervals, for example, every half an hour. Although not necessary, it is possible to configure other meters such as a water meter 14 and a gas meter 16 to transmit meter reading data to the communication hub 20 as well. A home gateway 18 of home energy management systems (HEMS) may be connected to the communication hub 20, or the communication hub 20 may function as a home gateway of the HEMS.

The communication hub 20 transmits meter reading data received from the respective meters to servers 42, 44 and 46 of a power company, a gas company and a water company via the Internet 40 regularly, for example, every half an hour. Based on the data, the power company and the like can predict demand and appropriately adjust supply. The communication hub 20 and the Internet 40 are connected by using a mobile phone line network 34 such as a mobile network of 2G, 3G, LTE or the like. The mobile phone line network 34 is connected to the Internet 40 via a gateway 38. The communication hub 20 is connected to the Internet 40 not only via a mobile phone line network but also via a power line communication (PLC) network using a power line as a communication line.

Not only the meter reading data but also other information may be transmitted from the communication hub 20 to the servers 42, 44 and 46. The service conductor 12 carrying commercial power to each house connects to the electricity meter 10 and the electricity meter 10 connects to the communication hub 20, and therefore the communication hub 20 may be configured to detect a power failure and to notify information about the power failure to the server 42. Based on the information, the power company can grasp an area in which a power failure has occurred in a timely manner and start restorations immediately after the power failure. The communication hub 20 is, as will be described later, provided with a high-capacity capacitor as a reserve power supply because the communication hub 20 will lose its power supply if a power failure occurs. The capacitor is charged at all times, and if a power failure occurs, information about the power failure is transmitted by using the power charged.

The communication hub 20 has a built-in internal antenna for a wireless communication, but for a case where a communication cannot be established only by the internal antenna, it is possible to further attach an external antenna 22 having a gain higher than that of the internal antenna to the communication hub 20. External antenna 22 is installed on the roof or the like of a house 30 and connected to the communication hub 20 installed in the house 30 or on the wall of the house 30 via a cable 24.

From the server 42 to the communication hub 20, for example, an acknowledgement of a normal receipt of the meter reading data or the like transmitted from the communication hub 20, a program for upgrading the communication hub 20, and the like may be transmitted.

The communication hub 20 installed in the service area of a wireless base station 36 is connected directly to the wireless based station 36 via a mobile phone line. The communication hub 20 installed outside of the service area of the wireless base station 36 is connected to the gateway 38 provided in the service area of the wireless base station 36 via a wireless multi-hop communication network (also called an RF mesh network) conforming to the IEEE 802.15.4 standard. The gateway 38 can be connected to the wireless base station 36 via a mobile phone line. In the RF mesh network, data is transmitted in such a manner as to multi-hop one communication hub 20 to another. In the RF mesh network, a plurality of communication hubs are connected in a mesh-like manner under one communication hub (gateway). The gateway 38 is not necessarily a device for exclusive use, and the communication hub 20 installed in the service area of the wireless base station 36 may operate as the gateway 38. The destination of data of each communication hub constituting the RF mesh network may be determined in advance by measuring the intensity of a received signal when installing the communication hub. It is also possible to determine the destination of data of each communication hub in such a manner as to minimize the cost by determining a plurality of communication hubs as candidates and then calculating the cost related to the communication quality and the like of each wireless communication pathway to the gateway.

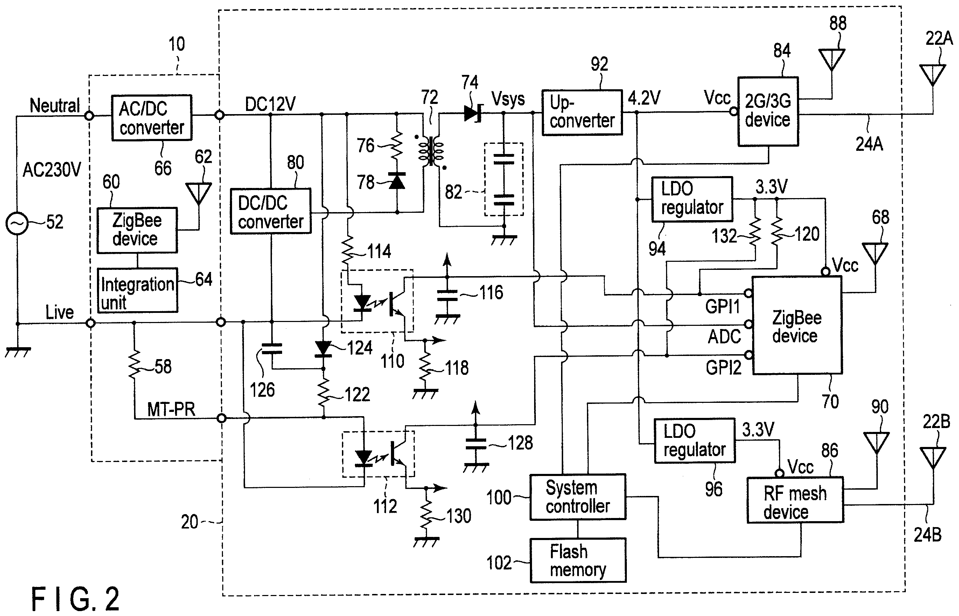

FIG. 2 is a circuit diagram showing an example of the smart meter realized as the electronic device of the embodiment. The electricity meter 10 is subjected to ordinary commercial power (such as an AC 200 V or 100 V in Japan and AC 230 V in the UK). A commercial power 52 has power supply lines including, for example, an AC 230 V neutral line and a non-isolated and ground level live line.

The electricity meter 10 includes an AC/DC converter 66, a tamper detection pull-down resistor 58, a wireless communication device conforming to the ZigBee standard (hereinafter referred to as a ZigBee device) 60, an antenna 62, an integration unit 64 and the like. The AC voltage from the neutral line is supplied to the AC/DC converter 66, and then the AC voltage is converted to a DC voltage (for example, DC 12 V) and supplied as a power supply to the communication hub 20 via a connector. The live line bypasses the electricity meter 10 and is connected directly to the ground line of the communication hub 20. The connector between the electricity meter 10 and the communication hub 20 includes a tamper detection terminal MT_PR in addition to a DC 12 V terminal and a live line terminal. The tamper detection terminal MT_PR of the communication hub 20 is connected to the live line via the pull-down resistor 58 (of, for example, 10 Ω) in the electricity meter 10.

House wirings connecting to electronic devices in house (not shown) is connected to the electricity meter 10, and an integration value of the power consumption of the electronic devices is obtained by the integration unit 64. The integral power consumption is wirelessly transmitted to the communication hub 20 via the ZigBee device 60 and the antenna 62 at regular intervals (for example, every half an hour). However, the above-described structure is in no way restrictive, and it is also possible to transmit the meter reading date of the electricity meter 10 to the communication hub 20 (system controller 100 which will be described later) by a wired connection via a connector.

Note that the data of the amount of gas used and the data of the amount of water used which are obtained from the meters other than the electricity meter such as the gas meter 16 and the water meter 14 can be transmitted to the communication hub 20 from ZigBee devices provided in the respective meters, and that the communication hub 20 can receive the data via an antenna 68 and a ZigBee device 70. That is, the communication hub 20 can receive not only the meter reading data of the electricity meter 10 but alto the meter reading data of various other meters wirelessly at regular intervals (for example, every half an hour) and transfer to servers.

The DC voltage of, for example, 12 V supplied from the electricity meter 10 to the communication hub 20 is transformed via a transformer 72 and is output as a Vsys voltage of, for example, 4.2 V via a diode 74. Both ends of a primary coil of the transformer 72 are connected to each other via a resistor 76 and a diode 78. The DC/DC converter 80 is also connected on the primary side of the transformer 72 and is supplied with the DC 12 V. Both ends of a secondary coil of the transformer 72 are connected to each other via a high-capacity electric double-layer capacitor (also called an ultra capacitor) 82, and the output voltage Vsys of the transformer 72 is charged in the electric double-layer capacitor 82. Since the electric double-layer capacitor 82 has a cathode and an anode which respectively constitute electric double layers, the electric double-layer capacitor 82 is equivalent to two capacitors connected in series. Each capacitor has a capacitance of 25 F, and the electric double-layer capacitor 82 equivalent to two capacitors connected in series has a capacitance of 12.5 F.

Although the communication hub 20 operates on power supplied from the electricity meter 10 as described above, the upper limit of the power which can be supplied from the electricity meter 10 to the communication hub 20 is determined (for example, 6 W). There are some cases where a mobile phone, in particular, at the time of 2G transmission momentarily requires a significant amount of power and the power supplied from the electricity meter 10 becomes insufficient. In the 2G transmission, if the intensity of a signal received in the wireless base station is weak, the server gives an instruction to the communication hub 20 to increase the transmission output, and the communication hub 20 accordingly increases the transmission output. Here, there are some cases where an instantaneous value of the power exceeds the upper limit. As an assist power supply for such cases, the electric double-layer capacitor 82 is provided. Further, as described above, the electric double-layer capacitor 82 is provided also as a reserve power supply configured, if a power failure occurs, to supply power for transmitting power failure information to the server 42. The capacitance of the electric double-layer capacitor 82 is set to such a value as to maintain the output voltage Vsys of the transformer 72 for a certain time even after the supply of the DV 12 V to the communication hub 20 is cut so that the communication hub 20 can perform data transmission for some time even after a power failure occurs.

The communication hub 20 has several, for example, three wireless communication devices including a wireless communication device conforming to mobile phone standards such as 2G, 3G and LTE (hereinafter referred to as a 2G/3G device) 84, the ZigBee device 70, an RF mesh device (wireless communication device conforming to the IEEE 802.15.4 standard and constituting an RF mesh network) 86 and the like. The ZigBee device 70 is provided for receiving meter reading data from each meter, and the 2G/3G device 84 and the RF mesh device 86 are provided for transmitting the meter reading data of each meter received from the ZigBee device 70 to servers 42, 44, and 46 or for receiving data from servers 42, 44, and 46.

To communication devices 70, 84 and 86, antennas 68, 88 and 90 are connected, respectively. Antennas 68, 88 and 90 are attached at the time of manufacturing a product and provided inside the housing (not shown) of the communication hub 20. Therefore, antennas 68, 88 and 90 are also called built-in internal antennas. Among communication devices 70, 84 and 86, at least the 2G/3G device 84 and the RF mesh device 86 may connect to external antennas 22A and 22B similar to external antenna 22 of FIG. 1 via cables 24A and 24B. External antennas 22A and 22B are provided outside of the housing of the communication hub 20 and attached after installation. An external antenna is used to perform a communication in such an environment where a sufficient level of received signal intensity cannot be obtained by an internal antenna. It is possible to provide the ZigBee device 70 without an external antenna since the sender of the data the ZigBee device 70 receives, namely, the electricity meter 10 is located adjacent to the ZigBee device 70.

As described above, the 2G/3G device 84 is used for transmitting meter reading data to and receiving data from servers in the service area of the wireless base station 36, and the RF mesh device 86 is used in the outside of the service area of the wireless base station 36. In this way, either the 2G/3G device 84 or the RF mesh-device 86 is used for the wireless communication with the servers based on the electric field intensity in an installation location. Here, although the other one of these communication devices seems to become unnecessary, there are some cases where the electric field intensity changes after installation because of construction of a new wireless base station, construction of a building which disturbs radio or the like, and therefore the communication hub 20 includes both communication devices and configured, when the communication hub 20 becomes unable to continue a wireless communication by one device, to switch to the other device to continue the wireless communication. Note that it is also possible in an apartment building, an office building and the like to connect the communication hub 20 to the Internet 40 via the PLC network using a power line as a communication line.

The operating voltage of the 2G/3G device 84 is 3.4 to 4.2 V (Typ: 3.8 V), and on the other hand, the operating voltages of the ZigBee device 70 and the RF mesh device 86 are 3.3 V (Typ). The voltage of the electric double-layer capacitor 82 decreases from 4.2 V when the DC 12 V is cut because of a power failure or the like, but since the output Vsys of the transformer 72 is increased, for example, to a DC 4.2 V via an up-converter 92 and supplied to the supply terminal Vcc of the 2G/3G device 84, the 2G/3G device 84 can operate even at the time of a power failure. The 2G/3G device 84 can transmit meter reading data to, for example, the server 42 of a power company even at the time of a power failure by communicating with the wireless base station 36 via internal antenna 88 or external antenna 22A.

The output Vsys of the transformer 72 is transformed into 3.3 V via a low-dropout (LDO) regulator 94 and supplied to the supply terminal Vcc of the ZigBee device 70. Therefore, the ZigBee device 70 can operate at the time of a power failure as well. The ZigBee device 70 receives meter reading data from each meter by communicating with the meter via antenna 68. The RF mesh device 86 transmits received meter reading data to the gateway 38 by way of (by hopping) RF mesh devices of other communication hubs 20 via internal antenna 90 or external antenna 22B. The 2G/3G device 84 transmits meter reading data received from a meter or meter reading data received from other communication hubs to the wireless base station 36 via internal antenna 88 or external antenna 22A.

The output Vsys of the transformer 72 is transformed into 3.3 V via the LDO regulator 96 and supplied to the supply terminal Vcc of the RF mesh device 86. Therefore, the RF mesh device 86 can operate even at the time of a power failure as well. The RF mesh device 86 forms a wireless mesh network with other communication hubs 20 via internal antenna 90 or external antenna 22B, thereby transmitting meter reading data to the gateway 38.

The 2G/3G device 84, the ZigBee device 70, and the RF mesh device 86 are connected to a system controller 100, and the transmission and receiving of meter reading data are controlled by the system controller 100. For example, meter reading data of each meter received by the ZigBee device 70 is transmitted from the 2G/3G device 84 or the RF mesh device 86 to the server side at regular intervals under the control of the system controller 100. The system controller 100 connects to a flash memory 102, and writes in the flash memory 102 identification information of the communication hub 20, meter reading date received from other meters, data necessary for performing the control and the like.

Since it is possible to detect a power failure by using a change in the power supply voltage supplied from the electricity meter 10, the detection of a power failure can be performed by any one of communication devices 70, 84 and 86. Here, a case where the detection of a power failure is performed by the ZigBee device 70 will be described as an example. It is also possible to perform the detection in the other devices by applying similar modifications thereto. The ZigBee device 70 includes a GPI1 terminal, a GPI2 terminal and an ADC terminal for power failure detection.

The voltage from the electricity meter 10 is a non-isolated voltage, and thus it is preferable to isolate a circuit (communication device) of the communication hub 20 which realizes a power failure detection function from the electricity meter 10. Therefore, although the output Vsys of the transformer 72 is directly connected to the ADC terminal of the ZigBee device 70, the DC 12 V supplied from the electricity meter 10 is connected to the GPI1 terminal and the GPI2 terminal of the ZigBee device 70 via photo couplers 110 and 112. In this way, the ZigBee device 70 is isolated from commercial power.

The anode of the LED of photo coupler 110 is connected to the DC 12 V line via a resistor 114, and the cathode thereof is connected to the live line. The collector of the phototransistor of photo coupler 110 is connected to the GPI1 terminal and is also grounded via a capacitor 116. The emitter of the phototransistor of photo coupler 110 is grounded via a resistor 118. The GPI1 terminal is connected to the output voltage of 3.3 V of the LDO regulator 94 via a resistor 120.

In this way, the DC 12 V on the primary side is inverted by photo coupler 110 and transmitted to the secondary side, and a change is detected by the GPI1 terminal. In doing this, since the secondary side of the transformer 72 is connected to the electric double-layer capacitor 82 and the output voltage Vsys of the transformer 72 will be maintained for a certain time even after the power supply (DC 12 V) is cut, the ZigBee device 70 can continue operation during that time and thus the GPI1 terminal going high can be detected.

The anode of the LED of photo coupler 112 is connected to the tamper detection terminal MT_PR and also connected to the DC 12 V line via a resistor 112 (of, for example, 510 Ω) and a diode 124. The connection point of resistor 122 and diode 124 is connected to the live line via a capacitor 126 (of, for example, 22 µF). The tamper detection terminal MT_PR is connected to the live line via the pull-down resistor 58 in the electricity meter 10, and thus the anode of the LED of photo coupler 112 is also connected to the live line via the pull-down resistor 58. The cathode of the LED of photo coupler 112 is connected to the live line. That is, the pull-down resistor 58 is connected between the anode and the cathode of the LED of photo coupler 112. The collector of the phototransistor of photo coupler 112 is connected to the GPI2 terminal and also grounded via a capacitor 128. The emitter of the phototransistor of photo coupler 112 is grounded via a resistor 130. The GPI2 terminal is connected to the output voltage of 3.3 V of the LDO regulator 94 via a resistor 132.

The DC 12 V on the primary side is inverted by photo coupler 112 and transmitted to the secondary side, and a change is detected by the GPI2 terminal. In doing this, since the secondary side of the transformer 72 is connected to the electric double-layer capacitor 82 and the output voltage Vsys of the transformer 72 is maintained for a certain time even after the power supply (DC 12 V) is cut, the ZigBee device 70 can continue operation during that time and thus the GPI1 terminal from going low can be detected.

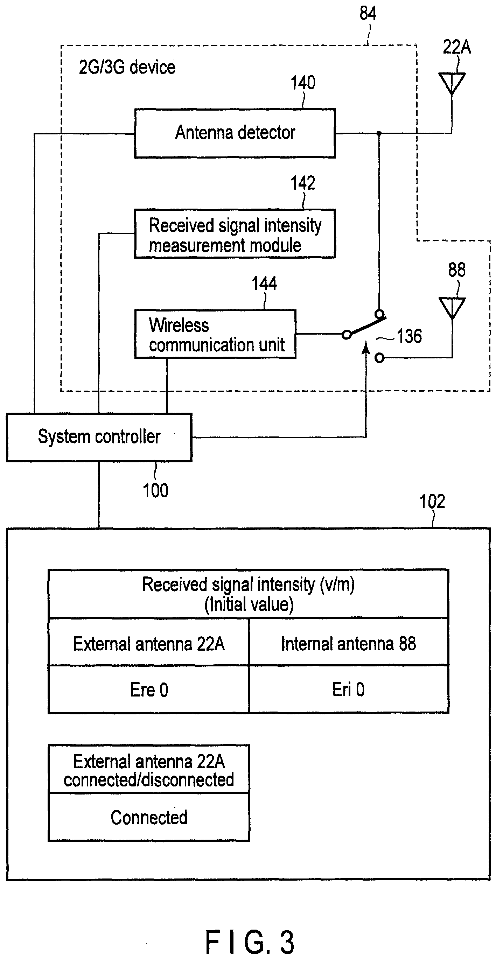

FIG. 3 illustrates an example of the 2G/3G device 84. The 2G/3G device 84 comprises an antenna detector 140, a received signal intensity measurement module 142, a wireless communication unit 144, an antenna selector 136 and the like. External antenna 22A is detachably connected to the antenna detector 140. The external antenna includes a built-in pull-down element. The antenna detector 140 is configured, since the connecting terminal is pulled down by the above-described pull-down element when external antenna 22A is connected, to detect connection or disconnection of external antenna 22A based on the level of the connecting terminal. If an antenna connection wire is disconnected or the antenna itself is broken, the antenna detector 140 detects an abnormal state of external antenna 22A as disconnection even when external antenna 22A is physically connected.

The received signal intensity measurement unit 142 is configured to measure the received signal intensities of antennas 88 and 22A. The detection result of the antenna detector 140 and the measurement results of the received signal intensity measurement unit 142 are supplied to the system controller 100 and stored in the flash memory 102. External antenna 22A or internal antenna 88 is connected to the wireless communication unit 144 via the selector 136. The selector 136 is switched by the system controller 100. The RF mesh device 86 to which external antenna 22B is connected may have a structure similar to that of the 2G/3G device 84. In the flash memory 102, the received signal intensities (initial values) of external antenna 22A and internal antenna 88 and the result of detecting presence or absence (connection or disconnection) of external antenna 22A are stored.

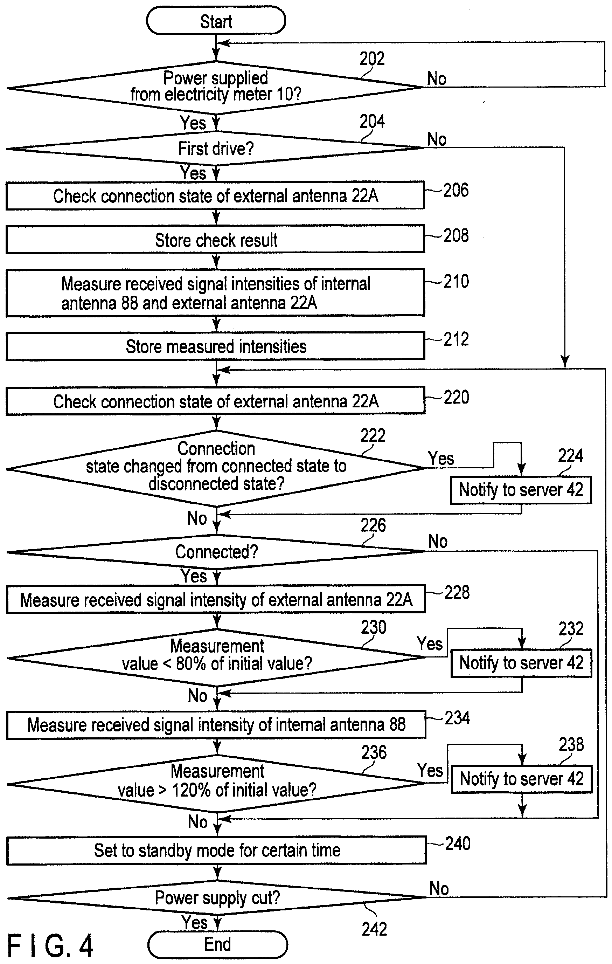

FIG. 4 is a flowchart showing an example of the operation of the communication hub 20 which is installed in an area where, although in the service area of the wireless base station 36, the received signal intensity of internal antenna 88 of the 2G/3G device 84 is weak and therefore uses external antenna 22A to perform a communication by the 2G/3G device 84. The following description is based on the assumption that the received signal intensity of internal antenna 88 is checked and then external antenna 22A is connected to the 2G/3G device 84 before the processing of FIG. 4 is executed. The processing of FIG. 4 starts when the communication hub 20 is attached to the electricity meter 10. Therefore, first, it is determined whether the communication hub 20 is attached to the electricity meter 10 or not. This determination step is performed by determining in block 202 whether the communication hub 20 is supplied with commercial power from the electricity meter 10 or not. It is possible to detect whether commercial power is supplied from the electricity meter 10 or not by detecting the GPI1 terminal of the ZigBee device 70 being high. Processing of block 202 is repeated until it is confirmed that there is a power supply.

When a power supply is confirmed, it is determined in block 204 whether this is the first drive or not. The first drive means that the communication hub 20 is connected to the electricity meter 10 for the first time. As will be described later in block 212, the received signal intensity is written in the flash memory 102 at the time of the first drive. Therefore, it is possible to determine whether this is the first drive or not based on whether the received signal intensity is written in a predetermined region in the flash memory 102 or not. Processing of block 206 is executed in a case where this is the first drive, and processing of block 220 is executed in a case where this is not the first drive but the second or later drive.

In block 206, the antenna detector 103 detects whether external antenna 22A is connected or disconnected. The detection result of whether external antenna 22A is connected or disconnected is stored in the flash memory 102 in block 208. In block 201, the received signal intensities (initial values) of internal antenna 88 and external antenna 22A are respectively measured by the received signal intensity measurement unit 142. The measurement results are stored in the flash memory 102 in block 212.

Then, in block 220, the antenna detector 140 detects whether external antenna 22A is connected or disconnected. As will be described below, the processing of block 220 is executed at regular intervals. In block 222, it is determined whether the detection result of the connection state is changed from a connected state to a disconnected state or not. This processing is executed to detect an abnormal state of the external antenna such as detachment. When the detection result of the connection state is changed from the connected state to the disconnected state, this change is notified to the server 42 in block 224. In this way, it is possible to instantaneously notify the server 42 of an abnormal state of external antenna 22A such as detachment or the like and to take appropriate measures such as installation of a new antenna, replacement, repair and the like without delay by sending a service person or the like.

When it is not detected in block 222 that the detection result of the connection state is changed from the connected state to the disconnected state or after the processing of block 224 is executed, it is determined in block 226 whether external antenna 22A is connected or not. If external antenna 22A is not connected, processing of block 240 is executed. In a case where external antenna 22A is determined in block 226 not to be connected, the change from the connected state to the disconnected state has already been detected in block 222 and notified to the server 24 in block 224. If external antenna 22A is determined to be connected, the received signal intensity of external antenna 22A is measured by the received signal intensity measurement unit 142 in block 228.

In block 230, the measurement value is compared with a threshold value. The threshold value corresponds to a value of the received signal intensity (initial value) of external antenna 22A stored in the flash memory 102, and a predetermined%, for example, 80% of the initial value may be the threshold value.

If the measurement value is less than or equal to 80% of the initial value, this state is notified to the server 42 in block 232. In this way, it is possible to instantaneously notify the server 42 of an abnormal state of external antenna 22A such as the received signal intensity being weak even though external antenna 22A is physically connected and to take appropriate measures such as installation of a new antenna, replacement, repair and the like without delay by sending a service person or the like.

When it is not detected in block 230 that the measurement value is less than or equal to 80% of the initial value or after processing of block 232 is executed, the received signal intensity of internal antenna 88 is measured by the received signal intensity measurement unit 142 in block 234. In block 236, the measurement value is compared with a threshold value. The threshold value corresponds to a value of the received signal intensity (initial value) of internal antenna 88 stored in the flash memory 102, and a predetermined%, for example, 120% of the initial value may be the threshold value. If the measurement value is greater than or equal to 120% of the initial value, this state is notified to the server 42 in block 238. In this way, it is possible to instantaneously notify the server 42 that external antenna 22A is not necessary since the electric field intensity is greater than that obtained at the time of installation and a sufficient level of received signal intensity can be obtained by internal antenna 88 because of construction of a new wireless base station after installation or the like, and to take appropriate measures such as collection of external antenna 22A and the like by sending a service person or the like.

When it is not detected in block 236 that the measurement value is greater than or equal to 120% of the initial value or after processing of block 238 is executed, a standby mode is set for a certain time in block 240. This is because it is possible to expect that, as the radio wave condition changes during that time, the received signal intensity of the external antenna increases and the notification to the server becomes no longer necessary. After a certain time passes, it is determined in block 242 whether the power supply is cut (a power failure occurs or the communication hub 20 is detached from the electricity meter 10) or not. The operation ends if the power supply is determined to have been cut, and on the other hand, processing returns to block 220 if the power is determined not to have been cut. In this way, the received signal intensity of external antenna 22A is repeatedly checked at regular intervals.

In the case of connecting external antenna 22B to the RF mesh device 86, the RF mesh device performs an operation similar to that of FIG. 4.

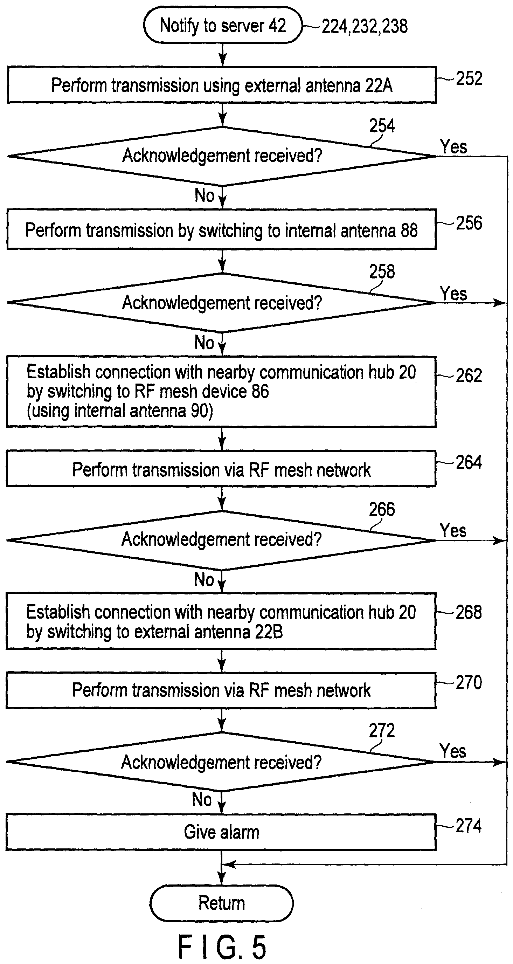

With reference to FIG. 5, a specific example of the step in blocks 224, 232, 238 of providing notification to the server will be described. In notifying that the external antenna is, although physically connected, in an abnormal state, there is a possibility that information cannot be reliably transmitted by a communication using the external antenna. Therefore, several modes of communications are tested. First, in block 252, notification information on the antenna's state is transmitted from the 2G/3G device 84 to the server 42 by using external antenna 22A. The server 42 is configured to return an acknowledgement when receiving a signal properly. Thus, it is determined in block 254 whether an acknowledgement from the server 42 is received within a certain time or not. If an acknowledgement is received, the notification step ends.

If an acknowledgement is not received within a certain time, the antenna is switched to internal antenna 88 and notification information is transmitted from the 2G/3G device 84 to the server 42 using internal antenna 88 in block 256. It is determined in block 258 whether an acknowledgement from the server 42 is received within a certain time or not. If an acknowledgement is received, the notification step ends.

If an acknowledgement is not received, a wireless communication device is switched from the 2G/3G device 84 to the RF mesh device 86 in block 262. An antenna which the RF mesh device 86 uses is initially set to internal antenna 90. In block 262, the RF mesh device 86 using internal antenna 90 searches a nearby communication hub 20 and establishes a connection with the nearby communication hub 20. In block 264, notification information is transmitted from the RF mesh device 86 to the RF mesh network via internal antenna 90, and then transmitted from the gateway 38 to the server 42. In block 266, it is determined whether an acknowledgment from the server 42 is received within a certain time or not. If an acknowledgement is received, the notification step ends.

If an acknowledgement is not received, in block 268, the antenna is switched to external antenna 22B, and the RF mesh device 86 using external antenna 22A searches a nearby communication hub 20 and establishes a communication with the nearby communication hub 20. In block 270, notification information is transmitted from the RF mesh device 86 to the RF mesh network via external antenna 22B, and then transmitted from the gateway 38 to the server 42. In block 272, it is determined whether an acknowledgement from the server 42 is received or not. If an acknowledgement is received, the notification step ends.

If an acknowledgement is not received, an alarm is given in some way, for example, by sound, light or the like in block 274, and the notification step ends. Here, it is possible to send an abnormality notification message automatically by other communication means, for example, by a fixed-line telephone, and it is also possible to send an abnormality notification e-mail to a smart phone or the like of the user.

As described above, in a smart meter, a communication hub includes an internal antenna and configured to transmit information of a meter to the server of a power company and receive information from the server. However, there are some cases where a sufficient level of received signal intensity cannot be obtained by the internal antenna and therefore an external antenna having a greater gain is connected to the communication hub and used to increase the received signal intensity. Once the smart meter is installed, since the smart meter automatically transmits information of the meter to the power company, a maintainer does not regularly visit each house to read the meter. Therefore, even if the external antenna is broken, the power company will not notice the problem. Since it becomes impossible to establish a stable communication or transmit information of the meter to the server, the power company cannot bill during that time.

According to an embodiment, the external antenna includes a built-in pull-down element, and the internal circuit of the communication hub is configured to automatically determine whether the external antenna is connected or not. The received signal intensity of the external antenna is stored in a nonvolatile memory when the communication hub is installed and is regularly measured while the smart meter is in operation. If the received signal intensity is less than or equal to a specific percentage of the value obtained at the time of installation even through the external antenna is still physically connected, the external antenna is judged to be in an abnormal state and then this is notified to the server of the power company. Therefore, it is possible to immediately detect an abnormality of the external antenna and notify the abnormality to the server, and thus the power company can respond promptly and prevent a communication failure resulting from the problem of the external antenna. Further, the connection state of an antenna is regularly measured, and if there is a change, the server is notified of the change similarly. Therefore, it is possible to promptly respond to stealing, detachment and the like of the antenna as well. In this way, in performing a communication using the external antenna, communication troubles resulting from the external antenna can be detected substantially in real time, and thus it is possible to take necessary measures quickly and ensure a stable communication.

Further, the received signal intensity of the internal antenna is also stored in the nonvolatile memory at the time of installation of the communication hub and is measured at regular intervals, and if the received signal intensity is greater than or equal to the value obtained at the time of installation, it is determined that the radio wave environment has improved and then it is notified to the server of the power company that the external antenna is unnecessary. Therefore, the power company can achieve cost reduction by collecting and reusing the external antenna.

In the above description, an electronic device with a communication function has been assumed to be an electricity meter to which a communication hub is attached, namely, a smart meter, but the electronic device may be any device requiring a wireless connection with an external device and may not necessarily be a meter. Further, although received signal intensity is used to check the radio wave environment of a wireless communication, it is also possible to use electric field intensity instead. The above description has been based on the assumption that a threshold value to be compared with a measurement value of received signal intensity is a measurement value obtained at the time of installation of the communication hub, but this is in no way restrictive, and the threshold value may be a measurement value obtained at a given time and a change of the radio wave environment may be detected by detecting a predetermined percentage of decrease or increase of the measurement value with respect to a stored value. Although an external antenna has been assumed to be the subject to checking, it is also possible to check the operation of an internal antenna instead of the external antenna.

Since the processing according to the present embodiment can be realized by a computer program, an advantage similar to that of the present embodiment can be easily realized merely by installing the computer program in a computer through a computer-readable storage medium storing the computer program and executing it.

The present invention is not limited to the above-described embodiments, but may be modified in various ways without departing from the scope of the appended claims. Various inventions can be realized by appropriately combining the structural elements disclosed in the embodiments. For instance, some of the disclosed structural elements may be deleted. Some structural elements of different embodiments may be combined appropriately.

## Claims

1. An electronic device comprising:
a first communication device (84) connected to an internal antenna (88) or an external antenna (22A) through a selector (136) wherein a gain of the external antenna (22A) is higher than a gain of the internal antenna (88), the internal antenna (88) is inside of a housing of the first communication device (84), the external antenna (22A) is outside the housing, and the first communication device (84) is configured to perform a wireless communication with an external device (42) using the internal antenna (88) when a received signal intensity of internal antenna (88) is not lower than a certain level and with the external device (42) using the external antenna (22A) when the received signal intensity is lower than the certain level;
a received signal intensity measurement unit (142) configured to measure a first signal intensity indicative of a received signal of the external antenna (22A) obtained at a first timing when the first communication device (84) is connected to the external antenna (22A);
a memory (102) configured to store the first signal intensity;
a first detector configured to detect an abnormality of the external antenna (22A) when a second signal intensity indicative of a received signal of the external antenna (22A) obtained at a second timing, after the first timing, when the first communication device (84) is connected to external antenna (22A), is less than or equal to a threshold value associated with the first signal intensity stored in the memory; and
a notification module configured to notify the abnormality of the external antenna (22A) to the external device (42) by the first communication device (84) using the internal antenna (88) or the external antenna (22A) when the first detector detects the abnormality of the external antenna (22A).

2. The electronic device of Claim 1, further comprising a second communication device (86) configured to wirelessly connect said electronic device and at least one second electronic device (20); and wherein
the notification module is further configured to notify the abnormality of the external antenna (22A) to the external device (42) via the at least one second electronic device (20).

3. The electronic device of Claim 1, further comprising a second detector configured to detect a disconnection of the external antenna (22A) from the first communication device (84), and wherein
the notification module is further configured to notify the disconnection of the external antenna (22A) to the external device (42) by the first communication device (84) using the internal antenna (88) or the external antenna (22A) .

4. The electronic device of Claim 1, wherein
the received signal intensity measurement unit (142) is further configured to measure a third signal intensity indicative of a received signal of the internal antenna (88) obtained at a third timing when the first communication device (84) is connected to the external antenna (22A),
the memory (102) is further configured to store the third signal intensity;
the first detector is further configured to detect improvement of a radio wave environment by comparing a fourth signal intensity indicative of a received signal intensity of the internal antenna (88) obtained at a fourth timing when the first communication device (84) is connected to the external antenna (22A)_after the third timing and the third signal intensity stored in the memory, and
the notification module is further configured to notify the improvement of the radio wave environment to said external device by the first communication device (84) using the internal antenna (88) or the external antenna (22A) when the first detector detects the improvement of the radic wave environment.

5. The electronic device of Claim 4, wherein the first detector is configured to judge that the radio wave environment is improved and to determine that the external antenna (22A) is unnecessary when the fourth signal intensity is greater than or equal to a second threshold value associated with the third signal intensity stored in the memory (102).

6. A communication method of an electronic device comprising a first communication device (84), the method comprising:
selecting one of an internal antenna (88) and an external antenna (22A) wherein a gain of the external antenna (22A) is higher than a gain of the internal antenna (88), the internal antenna (88) is inside of a housing of the first communication device (84) and the external antenna (22A) is outside the housing wherein the internal antenna (88) is selected when a received signal intensity of the internal antenna (88) is not lower than a certain level and the external antenna (22A) is selected when the received signal intensity is lower than the certain level;
performing a wireless communication with an external device (42) by the first communication device (84) using the internal antenna (88) or the external antenna (22A);
measuring a first signal intensity of a received signal of the external antenna (22A) at a first timing when the external antenna (22A) is selected;
storing the first signal intensity into a memory (102);
detecting an abnormality of the external antenna (22A) when a second signal intensity indicative of a received signal of the external antenna (22A) obtained at a second timing after the first timing, when the external antenna (22A) is selected, is less than or equal to a first threshold value associated with the first signal intensity stored in the memory (102); and
notifying the detected abnormality of the external antenna (22A) to the external device by the first communication device (84) using the internal antenna (88) or the external antenna (22A).

7. The method of Claim 6, wherein the notifying comprises notifying the abnormality of the external antenna (22A) to the external device via another electronic device.

8. The method of Claim 6, further comprising
detecting a disconnection of the external antenna (22A) from the first communication device (84), and
notifying the disconnection of the external antenna (22A) to the external device by the first communication device (84) using the internal antenna (88) or the external antenna (22A).

9. The method of Claim 6, further comprising:
measuring a third signal intensity indicative of a received signal of the internal antenna (88) obtained at a third timing when the external antenna (22A) is selected;
storing the third signal intensity into a memory (102);
detecting improvement of a radio wave environment by comparing a fourth signal intensity indicative of a received signal of the internal antenna (88) obtained at a fourth timing when the external antenna (22A) is selected after the third timing and the stored third signal intensity; and
notifying the detected improvement of the radio wave environment to the external device by the first communication device (84) using the internal antenna (88) or the external antenna (22A).

10. The method of Claim 9, further comprising judging that the radio wave environment is improved and determining that the external antenna (22A) is unnecessary when the fourth signal intensity is greater than or equal to a second threshold value associated with the third signal intensity stored in the memory (102).

## Patentansprüche

1. Eine elektronische Vorrichtung umfassend:
eine erste Kommunikationsvorrichtung (84), die mit einer internen Antenne (88) oder einer externen Antenne (22A) über einen Selektor (136) verbunden ist, wobei ein Verstärkungsfaktor der externen Antenne (22A) höher als ein Verstärkungsfaktor der internen Antenne (88) ist, die interne Antenne (88) sich innerhalb eines Gehäuses der ersten Kommunikationsvorrichtung (84) befindet, die externe Antenne (22A) sich außerhalb des Gehäuses befindet, und die erste Kommunikationsvorrichtung (84) konfiguriert ist, um eine drahtlose Kommunikation mit einer externen Vorrichtung (42) unter Verwendung der internen Antenne (88), wenn eine empfangene Signalintensität der internen Antenne (88) nicht niedriger als ein bestimmter Pegel ist, und unter Verwendung der externen Antenne (22A) mit der externen Vorrichtung (42) durchzuführen, wenn die empfangene Signalintensität niedriger als der bestimmte Pegel ist;
eine Messeinheit (142) für die Intensität des empfangenen Signals, die konfiguriert ist, um eine erste Signalintensität zu messen, die ein empfangenes Signal der externen Antenne (22A) anzeigt, das zu einem ersten Zeitpunkt erhalten wird, wenn die erste Kommunikationsvorrichtung (84) mit der externen Antenne (22A) verbunden ist;
einen Speicher (102), der konfiguriert ist , um die erste Signalintensität zu speichern;
einen ersten Detektor, der konfiguriert ist, um eine Abnormalität der externen Antenne (22A) zu erfassen, wenn eine zweite Signalintensität, die ein empfangenes Signal der externen Antenne (22A) anzeigt, das zu einem zweiten Zeitpunkt nach dem ersten Zeitpunkt erhalten wird, wenn die erste Kommunikationsvorrichtung (84) mit der externen Antenne (22A) verbunden ist, kleiner oder gleich einem Schwellenwert ist, der mit der im Speicher gespeicherten ersten Signalintensität verbunden ist; und
ein Benachrichtigungsmodul, das konfiguriert ist, um die Anomalie der externen Antenne (22A) an die externe Vorrichtung (42) durch die erste Kommunikationsvorrichtung (84) unter Verwendung der internen Antenne (88) oder der externen Antenne (22A) zu melden, wenn der erste Detektor die Anomalie der externen Antenne (22A) erfasst.

2. Die elektronische Vorrichtung nach Anspruch 1, die ferner eine zweite Kommunikationsvorrichtung (86) umfasst, die konfiguriert ist, um die elektronische Vorrichtung und mindestens eine zweite elektronische Vorrichtung (20) drahtlos zu verbinden; und wobei
das Benachrichtigungsmodul ferner konfiguriert ist, um die Anomalie der externen Antenne (22A) der externen Vorrichtung (42) über die mindestens eine zweite elektronische Vorrichtung (20) mitzuteilen.

3. Die elektronische Vorrichtung nach Anspruch 1, die ferner einen zweiten Detektor umfasst, der konfiguriert ist, um eine Abtrennung der externen Antenne (22A) von der ersten Kommunikationsvorrichtung (84) zu erkennen, und wobei
das Benachrichtigungsmodul ist ferner so konfiguriert, dass es die Trennung der externen Antenne (22A) von der externen Vorrichtung (42) durch die erste Kommunikationsvorrichtung (84) unter Verwendung der internen Antenne (88) oder der externen Antenne (22A) meldet.

4. Die elektronische Vorrichtung nach Anspruch 1, wobei
die Messeinheit (142) für die Intensität des empfangenen Signals weiterhin konfiguriert ist, um eine dritte Signalintensität zu messen, die ein empfangenes Signal der internen Antenne (88) anzeigt, das zu einem dritten Zeitpunkt erhalten wird, wenn die erste Kommunikationsvorrichtung (84) mit der externen Antenne (22A) verbunden ist,
der Speicher (102) ferner konfiguriert ist, um die dritte Signalintensität zu speichern;
der erste Detektor ferner konfiguriert ist, um eine Verbesserung einer Funkwellenumgebung zu erfassen, indem er eine vierte Signalintensität, die eine empfangene Signalintensität der internen Antenne (88) anzeigt, die zu einem vierten Zeitpunkt erhalten wird, wenn die erste Kommunikationsvorrichtung (84) nach dem dritten Zeitpunkt mit der externen Antenne (22A) verbunden ist, und die dritte Signalintensität, die in dem Speicher gespeichert ist, vergleicht, und
das Benachrichtigungsmodul ferner konfiguriert ist, um die Verbesserung der Funkwellenumgebung an die externe Vorrichtung durch die erste Kommunikationsvorrichtung (84) unter Verwendung der internen Antenne (88) oder der externen Antenne (22A) zu melden, wenn der erste Detektor die Verbesserung der Funkwellenumgebung erfasst.

5. Die elektronische Vorrichtung nach Anspruch 4, wobei der erste Detektor konfiguriert ist, um zu beurteilen, dass die Funkwellenumgebung verbessert ist, und um zu bestimmen, dass die externe Antenne (22A) unnötig ist, wenn die vierte Signalintensität größer oder gleich einem zweiten Schwellenwert ist, der mit der im Speicher (102) gespeicherten dritten Signalintensität verbunden ist.

6. Ein Kommunikationsverfahren einer elektronischen Vorrichtung, die eine erste Kommunikationsvorrichtung (84) umfasst, wobei das Verfahren umfasst:
Auswählen einer internen Antenne (88) oder einer externen Antenne (22A), wobei ein Verstärkungsfaktor der externen Antenne (22A) höher als ein Verstärkungsfaktor der internen Antenne (88) ist, die interne Antenne (88) sich innerhalb eines Gehäuses der ersten Kommunikationsvorrichtung (84) befindet und die externe Antenne (22A) sich außerhalb des Gehäuses befindet, wobei die interne Antenne (88) ausgewählt wird, wenn eine empfangene Signalintensität der internen Antenne (88) nicht niedriger als ein bestimmter Pegel ist, und die externe Antenne (22A) ausgewählt wird, wenn die empfangene Signalintensität niedriger als der bestimmte Pegel ist;
Durchführung einer drahtlosen Kommunikation mit einer externen Vorrichtung (42) durch die erste Kommunikationsvorrichtung (84) unter Verwendung der internen Antenne (88) oder der externen Antenne (22A);
Messen einer ersten Signalintensität eines empfangenen Signals der externen Antenne (22A) zu einem ersten Zeitpunkt, wenn die externe Antenne (22A) ausgewählt ist;
Speichern der ersten Signalintensität in einem Speicher (102) ;
Erfassen einer Anomalie der externen Antenne (22A), wenn eine zweite Signalintensität, die ein empfangenes Signal der externen Antenne (22A) anzeigt, das zu einem zweiten Zeitpunkt nach dem ersten Zeitpunkt erhalten wird, wenn die externe Antenne (22A) ausgewählt ist, kleiner oder gleich einem ersten Schwellenwert ist, der mit der ersten Signalintensität verbunden ist, die in dem Speicher (102) gespeichert ist; und
Benachrichtigen der externen Vorrichtung über die festgestellte Anomalie der externen Antenne (22A) durch die erste Kommunikationsvorrichtung (84) unter Verwendung der internen Antenne (88) oder der externen Antenne (22A).

7. Das Verfahren nach Anspruch 6, wobei das Melden das Melden der Anormalie der externen Antenne (22A) an die externe Vorrichtung über eine andere elektronische Vorrichtung umfasst.

8. Das Verfahren nach Anspruch 6, ferner umfassend:
Erfassen einer Trennung der externen Antenne (22A) von der ersten Kommunikationsvorrichtung (84), und
Benachrichtigen über die Trennung der externen Antenne (22A) von der externen Vorrichtung durch die erste Kommunikationsvorrichtung (84) unter Verwendung der internen Antenne (88) oder der externen Antenne (22A).

9. Das Verfahren nach Anspruch 6 ferner umfassend:
Messen einer dritten Signalintensität, die ein empfangenes Signal der internen Antenne (88) anzeigt, das zu einem dritten Zeitpunkt erhalten wird, wenn die externe Antenne (22A) ausgewählt ist;
Speichern der dritten Signalintensität in einem Speicher (102) ;
Erfassen einer Verbesserung einer Funkwellenumgebung durch Vergleichen einer vierten Signalintensität, die ein empfangenes Signal der internen Antenne (88) anzeigt, das zu einem vierten Zeitpunkt erhalten wird, wenn die externe Antenne (22A) nach dem dritten Zeitpunkt ausgewählt wird, und der gespeicherten dritten Signalintensität; und
Mitteilen der festgestellten Verbesserung der Funkwellenumgebung an die externe Vorrichtung durch die erste Kommunikationsvorrichtung (84) unter Verwendung der internen Antenne (88) oder der externen Antenne (22A).

10. Das Verfahren nach Anspruch 9, bei dem ferner beurteilt wird, dass die Funkwellenumgebung verbessert ist, und bestimmt wird, dass die externe Antenne (22A) unnötig ist, wenn die vierte Signalintensität größer als oder gleich einem zweiten Schwellenwert ist, der mit der im Speicher (102) gespeicherten dritten Signalintensität verbunden ist.

## Revendications

1. Dispositif électronique comprenant :
un premier dispositif de communication (84) connecté à une antenne interne (88) ou une antenne externe (22A) par le biais d'un sélecteur (136), dans lequel un gain de l'antenne externe (22A) est supérieur à un gain de l'antenne interne (88), l'antenne interne (88) se trouve à l'intérieur d'un logement du premier dispositif de communication (84), l'antenne externe (22A) se trouve à l'extérieur du logement, et le premier dispositif de communication (84) est configuré pour effectuer une communication sans fil avec un dispositif externe (42) à l'aide de l'antenne interne (88) lorsqu'une intensité de signal reçu de l'antenne interne (88) n'est pas inférieure à un certain niveau, et avec le dispositif externe (42) à l'aide de l'antenne externe (22A) lorsque l'intensité de signal reçu est inférieure au certain niveau ;
une unité de mesure d'intensité de signal reçu (142) configurée pour mesurer une première intensité de signal qui indique un signal reçu de l'antenne externe (22A) obtenue à un premier moment lorsque le premier dispositif de communication (84) est connecté à l'antenne externe (22A) ;
une mémoire (102) configurée pour stocker la première intensité de signal ;
un premier détecteur configuré pour détecter une anomalie de l'antenne externe (22A) lorsqu'une seconde intensité de signal qui indique un signal reçu de l'antenne externe (22A) obtenue à un second moment après le premier moment, lorsque le premier dispositif de communication (84) est connecté à l'antenne externe (22A), est inférieure ou égale à une valeur de seuil associée à la première intensité de signal stockée dans la mémoire ; et
un module de notification configuré pour signaler l'anomalie de l'antenne externe (22A) au dispositif externe (42) par le premier dispositif de communication (84) à l'aide de l'antenne interne (88) ou de l'antenne externe (22A) lorsque le premier détecteur détecte l'anomalie de l'antenne externe (22A).

2. Dispositif électronique selon la revendication 1, comprenant en outre un second dispositif de communication (86) configuré pour connecter sans fil ledit dispositif électronique et au moins un second dispositif électronique (20) ; et dans lequel
le module de notification est en outre configuré pour signaler l'anomalie de l'antenne externe (22A) au dispositif externe (42) via le au moins un second dispositif électronique (20).

3. Dispositif électronique selon la revendication 1, comprenant en outre un second détecteur configuré pour détecter une déconnexion de l'antenne externe (22A) du premier dispositif de communication (84), et dans lequel
le module de notification est en outre configuré pour signaler la déconnexion de l'antenne externe (22A) au dispositif externe (42) par le premier dispositif de communication (84) à l'aide de l'antenne interne (88) ou de l'antenne externe (22A).

4. Dispositif électronique selon la revendication 1, dans lequel
l'unité de mesure d'intensité de signal reçu (142) est en outre configurée pour mesurer une troisième intensité de signal qui indique un signal reçu de l'antenne interne (88) obtenue à un troisième moment lorsque le premier dispositif de communication (84) est connecté à l'antenne externe (22A),
la mémoire (102) est en outre configurée pour stocker la troisième intensité de signal ;
le premier détecteur est en outre configuré pour détecter une amélioration d'un environnement d'onde radio en comparant une quatrième intensité de signal qui indique une intensité de signal reçu de l'antenne interne (88) obtenue à un quatrième moment lorsque le premier dispositif de communication (84) est connecté à l'antenne externe (22A) après le troisième moment avec la troisième intensité de signal stockée dans la mémoire, et
le module de notification est en outre configuré pour signaler l'amélioration de l'environnement d'onde radio audit dispositif externe par le premier dispositif de communication (84) à l'aide de l'antenne interne (88) ou de l'antenne externe (22A) lorsque le premier détecteur détecte l'amélioration de l'environnement d'onde radio.

5. Dispositif électronique selon la revendication 4, dans lequel le premier détecteur est configuré pour juger que l'environnement d'onde radio est amélioré et pour déterminer que l'antenne externe (22A) est inutile lorsque la quatrième intensité de signal est supérieure ou égale à une seconde valeur de seuil associée à la troisième intensité de signal stockée dans la mémoire (102).

6. Procédé de communication d'un dispositif électronique comprenant un premier dispositif de communication (84), le procédé comprenant :
la sélection de l'une d'une antenne interne (88) et d'une antenne externe (22A), dans lequel un gain de l'antenne externe (22A) est supérieur à un gain de l'antenne interne (88), l'antenne interne (88) se trouve à l'intérieur d'un logement du premier dispositif de communication (84) et l'antenne externe (22A) se trouve à l'extérieur du logement, dans lequel l'antenne interne (88) est sélectionnée lorsqu'une intensité de signal reçu de l'antenne interne (88) n'est pas inférieure à un certain niveau et l'antenne externe (22A) est sélectionnée lorsque l'intensité de signal reçu est inférieure au certain niveau ;
la réalisation d'une communication sans fil avec un dispositif externe (42) par le premier dispositif de communication (84) à l'aide de l'antenne interne (88) ou de l'antenne externe (22A) ;
la mesure d'une première intensité de signal d'un signal reçu de l'antenne externe (22A) à un premier moment lorsque l'antenne externe (22A) est sélectionnée ;
le stockage de la première intensité de signal dans une mémoire (102) ;
la détection d'une anomalie de l'antenne externe (22A) lorsqu'une seconde intensité de signal qui indique un signal reçu de l'antenne externe (22A) obtenue à un second moment après le premier moment, lorsque l'antenne externe (22A) est sélectionnée, est inférieure ou égale à une première valeur de seuil associée à la première intensité de signal stockée dans la mémoire (102) ; et
le signalement de l'anomalie de l'antenne externe (22A) au dispositif externe par le premier dispositif de communication (84) à l'aide de l'antenne interne (88) ou de l'antenne externe (22A).

7. Procédé selon la revendication 6, dans lequel le signalement comprend le signalement de l'anomalie de l'antenne externe (22A) au dispositif externe via un autre dispositif électronique.

8. Procédé selon la revendication 6, comprenant en outre
la détection d'une déconnexion de l'antenne externe (22A) du premier dispositif de communication (84), et
le signalement de la déconnexion de l'antenne externe (22A) au dispositif externe par le premier dispositif de communication (84) à l'aide de l'antenne interne (88) ou de l'antenne externe (22A).

9. Procédé selon la revendication 6, comprenant en outre :
la mesure d'une troisième intensité de signal qui indique un signal reçu de l'antenne interne (88) obtenue à un troisième moment lorsque l'antenne externe (22A) est sélectionnée ;
le stockage de la troisième intensité de signal dans une mémoire (102) ;
la détection d'une amélioration d'un environnement d'onde radio en comparant une quatrième intensité de signal qui indique un signal reçu de l'antenne interne (88) obtenue à un quatrième moment lorsque l'antenne externe (22A) est sélectionnée après le troisième moment avec la troisième intensité de signal stockée ; et
le signalement de l'amélioration détectée de l'environnement d'onde radio au dispositif externe par le premier dispositif de communication (84) à l'aide de l'antenne interne (88) ou de l'antenne externe (22A).

10. Procédé selon la revendication 9, comprenant en outre le jugement du fait que l'environnement d'onde radio soit amélioré et la détermination du fait que l'antenne externe (22A) soit inutile lorsque la quatrième intensité de signal est supérieure ou égale à une seconde valeur de seuil associée à la troisième intensité de signal stockée dans la mémoire (102).
